# EUROPÄISCHE PATENTSCHRIFT

(11) **EP 2 212 047 B1**
(45) Veröffentlichungstag und Bekanntmachung des Hinweises auf die Patenterteilung: **23.05.2012**
(21) Anmeldenummer: 08786290.0
(22) Anmeldetag: 22.07.2008
(51) Int. Cl.: B23D 45/04, B23Q 11/06

(54) **WERKZEUGMASCHINE**
MACHINE TOOL
MACHINE-OUTIL

(30) Priorität: 20.09.2007 DE 102007044801
(43) Veröffentlichungstag der Anmeldung: 04.08.2010
(73) Patentinhaber: Robert Bosch GmbH, 70442 Stuttgart (DE)
(72) Erfinder: LOEWE, Andreas, 31246 Lahstedt (DE); HERRMANN, Ingo, 71292 Friolzheim (DE); MARX, Klaus, 70563 Stuttgart (DE); NIEHSEN, Wolfgang, 31162 Bad Salzdetfurth (DE); KOEDER, Thilo, 70839 Gerlingen (DE); STELLMANN, Georg, 71642 Ludwigsburg (DE); PLATZER, Joachim, 71686 Remseck-Hochberg (DE); JACKISCH, Sebastian, 71638 Ludwigsburg (DE)
(86) Internationale Anmeldenummer: PCT/EP2008/059554
(87) Internationale Veröffentlichungsnummer: WO 2009/040152

(56) Entgegenhaltungen:
- EP-A- 1 647 357
- WO-A1-2006/135961
- US-A1- 2004 226 424

## Beschreibung

### Stand der Technik

Die Erfindung geht aus von einer Werkzeugmaschine nach dem Oberbegriff des Anspruchs 1, wie sie aus der EP 1 647 357 bekannt ist.

Es ist eine Paneelsäge bekannt, die einen Arbeitstisch, eine Lagereinheit zur rotatorischen Lagerung eines Sägeblatts und einen durch einen Bediener betätigbaren Versenkarm zum Bewegen der Lagereinheit relativ zum Arbeitstisch aufweist.

Aus der EP 1 647 357 A1 ist ein Überwachungssystem für eine Gefahrenzone einer Maschine bekannt. Die EP 1 647 357 A1 zeigt eine Presse mit einem linear verschieblichen Pressstempel und einem Arbeitstisch zur Auflage eines zu bearbeitenden Werkstückes. Zur Überwachung des Gefahrenbereichs der Presse, der bei der Vorrichtung der EP 1 647 357 A1 insbesondere durch den Arbeitstisch gebildet wird, besitzt die Vorrichtung eine extern zur Presse angeordnete Kamera, die den Arbeitsbereich der Presse beobachtet. Die Bilder der Kamera, die diese während des aktuellen Betriebes der Presse macht, werden mit, in einem Speicher abgelegten Bildern verglichen, die normale, gefahrlose Arbeitssituationen der Presse wiedergeben. Sollte sich ein Gegenstand, wie beispielsweise eine menschliche Hand der Gefahrenzone nähern, so würde dies von dem Kamerasystem erfasst und durch einen Bildvergleich mit den abgespeicherten Anwendungssituationen als eine Gefahrensituation (d.h. als ein anomaler Betrieb der Presse) erkannt, so dass es beispielsweise zu einer Sicherheitsabschaltung des Systems kommen kann.

Die US 2004/0226424 A1 offenbart ein Sägesystem mit einem Sensormechanismus, der in einem Ausführungsbeispiel als eine Lichtschranke ausgebildet ist. Wird diese Lichtschranke von einem Anwender unterbrochen, so kann der Betrieb des Werkzeuges gestoppt werden. Ein weiteres Ausführungsbeispiel der US 2004/0226424 A1 zeigt einen elektrostatischen Sensor, der bei Annäherung eines Anwenders einen Spannungs-überschlag erzeugt, mit dem ein Anwender gewarnt wird, dem (potentiell gefährlichen) Werkzeug nicht zu nahe zu kommen.

Die WO 2006/135961 A1 offenbart eine mechanische Presse, deren Stempel linear verschieblich ist, um ein Werkstück, welches auf einem Arbeitstisch aufgelegt ist, zu verformen. Der Werkstückbereich wird in Querrichtung großflächig von einem Lichtstrahl ausgeleuchtet, um zu beurteilen, ob das bearbeitete Werkstück die erwünschte Form und Toleranzen besitzt. Dazu wird das, das Werkstück passierende Licht auf eine CCD Anordnung fokussiert und ausgewertet. Darüber hinaus besitzt das System der WO 2006/135961 A1 auch einen Sicherheitsmode in Form einer Lichtschranke, die von demselben großflächigen Lichtstrahl gebildet ist. Detektiert die Lichtschranke keinerlei Störobjekte im Wege des Pressstempels, schaltet das System in einen Abbildungsmode um, um mittels der CCD Anordnung zu bestimmen, ob das bearbeitete Werkstück die erwünschte Form und Toleranzen besitzt.

### Vorteile de Erfindung

Die Erfindung geht aus von einer Werkzeugmaschine mit einer Arbeitsfläche zum Platzieren eines zu bearbeitenden Werkstücks und einer Werkzeuglagereinheit zum Lagern eines Werkzeugs, die relativ zur Arbeitsfläche beweglich gelagert ist.

Es wird vorgeschlagen, dass die Werkzeugmaschine eine Werkzeugbetriebsüberwachungsvorrichtung zur Überwachung eines Werkzeugbereichs zumindest bei einem Werkzeugbetrieb umfasst, die eine Bilderfassungseinheit aufweist. Es kann dadurch eine besonders hohe Sicherheit in der Bedienung der Werkzeugmaschine erreicht werden. Besonders vorteilhaft kann durch die Bilderfassungseinheit eine hohe Zuverlässigkeit in der Überwachung des Werkzeugbereichs erreicht werden, insbesondere bei einer Bewegung der Werkzeuglagereinheit relativ zur Arbeitsfläche. Die Werkzeugmaschine weist zweckmäßigerweise eine Lagereinheit auf, die dazu dient, die Werkzeuglagereinheit relativ zur Arbeitsfläche beweglich zu lagern und über welche die Werkzeuglagereinheit mit der Arbeitsfläche verbunden ist. Vorteilhafterweise weist die Werkzeugmaschine eine Führungseinheit auf, die zur Führung der Werkzeuglagereinheit vorgesehen ist. Ferner umfasst die Werkzeugmaschine bevorzugterweise eine Betätigungseinheit, die zu einer Bewegung der Werkzeuglagereinheit relativ zur Arbeitsfläche durch einen Bediener vorgesehen ist. Bei der Bewegung der Werkzeuglagereinheit wird ein darin gelagertes Werkzeug von einer Anfangsposition bis zu zumindest einer Arbeitsposition geführt, in welcher es das Werkstück kontaktiert. Unter einem "Werkzeugbereich" soll in diesem Zusammenhang insbesondere ein Bereich verstanden werden, der sich aus Punkten zusammensetzt, die einen kleinsten Abstand zu einem Werkzeug und/oder zu einem Werkzeugstreckenbereich der Werkzeugmaschine von maximal 10 cm, vorteilhaft maximal 5 cm und bevorzugt maximal 2 cm aufweisen. Ein "Werkzeugstreckenbereich" setzt sich hierbei insbesondere aus Punkten zusammen, die von einem Werkzeug potentiell belegbar sind, insbesondere aufgrund der beweglichen Lagerung der Werkzeuglagereinheit zum Lagern des Werkzeugs relativ zur Werkzeugmaschinenarbeitsfläche. Die Bilderfassungseinheit besitzt ein Blickfeld, das im Betrieb vorteilhafterweise einen überwachten Bereich der Werkzeugmaschine festlegt. Der überwachte Bereich umfasst vorzugsweise zumindest einen Teilbereich des Werkzeugbereichs. Vorteilhafterweise umfasst die vertikale Projektion des überwachten Bereichs auf die Arbeitsfläche die vertikale Projektion des Werkzeugbereichs auf die Arbeitsfläche. Ferner kann der überwachte Bereich zumindest einen Teilbereich des Werkzeugstreckenbereichs umfassen.

Außerdem wird vorgeschlagen, dass die Werkzeugbetriebsüberwachungsvorrichtung eine Auswerteeinheit aufweist, die anhand von erfassten Bilddaten zur Erkennung des Vorhandenseins eines menschlichen Körperteils im Werkzeugbereich vorgesehen ist.

Ferner wird erfindungsgemäß vorgeschlagen, dass die Werkzeugmaschine ein Mitnahmemittel aufweist, das dazu dient, zumindest ein Erfassungsmittel der Bilderfassungseinheit bei einer Bewegung der Werkzeuglagereinheit relativ zur Arbeitsfläche mitzunehmen. Dadurch kann eine hohe Sicherheit, insbesondere bei einer Bewegung der Werkzeuglagereinheit, erreicht werden.

Eine besonders kompakte Ausführung der Werkzeugmaschine kann erreicht werden, wenn die Werkzeugmaschine eine Schutzvorrichtung zum Bedecken eines Werkzeugs aufweist, an welcher zumindest ein Erfassungsmittel der Bilderfassungseinheit befestigt ist.

Alternativ oder zusätzlich wird vorgeschlagen, dass die Werkzeugmaschine eine Führungseinheit aufweist, an welcher zumindest ein Erfassungsmittel der Bilderfassungseinheit befestigt ist, wodurch Bauteile und Bauraum eingespart werden können. Ferner wird vorgeschlagen, dass die Werkzeuglagereinheit zur rotatorischen Lagerung eines Werkzeugs in einer Rotationsebene vorgesehen ist und die Bilderfassungseinheit ein Erfassungsmittel aufweist, das seitlich der Rotationsebene angeordnet ist, wodurch eine vorteilhafte seitliche Überwachung des Werkzeugs erreicht werden kann. Unter einer Anordnung "seitlich" der Rotationsebene soll insbesondere eine Anordnung in einem Halbraum verstanden werden, der durch die Rotationsebene begrenzt ist. Insbesondere soll eine vollständige Einbettung in diesem Halbraum verstanden werden. Unter einer "Rotationsebene" soll insbesondere eine Ebene verstanden werden, die den Schwerpunkt des Werkzeugs aufweist und senkrecht zu einer Rotationsachse des Werkzeugs ausgerichtet ist. Besonders vorteilhaft ist das Erfassungsmittel seitlich des Werkzeugs angeordnet. Hierbei ist die Projektion des Erfassungsmittels senkrecht zur Rotationsebene auf das Werkzeug in einer Werkzeugfläche angeordnet, vorzugsweise eingebettet.

Bei einer typischen Anwendung der Werkzeugmaschine sind die Hände eines Bedieners beidseitig von einem Werkzeug angeordnet, wobei eine Hand eine Betätigungseinheit bedient und die andere Hand auf ein Werkstück gelegt ist. In diesem Zusammenhang kann eine hohe Sicherheit erreicht werden, wenn die Werkzeugmaschine eine Betätigungseinheit zur Bewegung der Werkzeuglagereinheit relativ zur Arbeitsfläche durch einen Bediener aufweist und die Betätigungseinheit und das Erfassungsmittel beidseitig der Rotationsebene angeordnet sind.

In einer vorteilhaften Weiterbildung der Erfindung wird vorgeschlagen, dass die Werkzeugmaschine ein Sicherungsmittel aufweist, das dazu vorgesehen ist, anhand eines Signals der Werkzeugbetriebsüberwachungsvorrichtung eine Bewegung der Werkzeuglagereinheit relativ zur Arbeitsfläche zu verhindern, wodurch ein Kontakt eines gelagerten Werkzeugs mit einem sich in einem Werkzeugstreckenbereich befindenden unerwünschten Objekt oder einem menschlichen Körperteil vorteilhaft vermieden werden kann.

Es kann eine schnelle und zuverlässige Erkennungsfunktion anhand von aufgenommenen Bilddaten erreicht werden, wenn die Werkzeugbetriebsüberwachungsvorrichtung eine Bildverarbeitungseinheit aufweist, die zur Auswertung von zumindest einem Merkmal aus der Gruppe Farbe, Kontur und Textur vorgesehen ist. Besonders vorteilhaft ist die Auswerteeinheit dazu vorgesehen, eine Anwendungssituation mittels eines Vergleichs von Bilddaten mit vorgespeicherten Daten von Musterbildern zu erkennen.

Vorteilhafterweise weist die Werkzeugbetriebsüberwachungsvorrichtung eine Bildverarbeitungseinheit auf, die anhand von erfassten Bilddaten zur Ermittlung einer Bewegungsbahn eines sich im Werkzeugbereich bewegenden Objekts vorgesehen ist. Dadurch kann eine hohe Geschwindigkeit in der Erkennung eines Gefahrenpotentials bei einem Betrieb der Werkzeugmaschine erreicht werden. Besonders vorteilhaft ist, wenn die Bildverarbeitungseinheit dazu vorgesehen ist, die Bewegungsbahn auf eine künftige Position des Objekts relativ zum Werkzeug zu extrapolieren.

In einer vorteilhaften Weiterbildung der Erfindung wird vorgeschlagen, dass die Werkzeugbetriebsüberwachungsvorrichtung eine Bildverarbeitungseinheit aufweist, die anhand von erfassten Bilddaten zur Ermittlung eines Geschwindigkeitsgrads eines sich im Werkzeugbereich bewegenden Objekts vorgesehen ist. In diesem Zusammenhang kann eine hohe Flexibilität in der Anwendung der Werkzeugmaschine erreicht werden, wenn die Werkzeugbetriebsüberwachungsvorrichtung zumindest zwei Sicherheitsmodi aufweist, die jeweils einem Geschwindigkeitsgrad zugeordnet sind.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Paneelsäge mit einer in einer Schutzhaube integrierten Werkzeugbetriebsüberwachungsvorrichtung in einer Seitenansicht,
- Fig. 2: die Paneelsäge aus Figur 1 in einer Ansicht von oben,
- Fig. 3: ein Sägeblatt und einen Werkzeugbereich der Paneelsäge in einer Frontansicht,
- Fig. 4: eine Schaltung mit einer Sensoreinheit, einer Auswerteeinheit und Sicherheitsmitteln zum Blockieren einer Bewegung des Sägeblatts,
- Fig. 5: eine Hand eines Benutzers im Werkzeugbereich
- Fig. 6: eine Hand eines Benutzers im Werkzeugbereich zu zwei verschiedenen Zeitpunkten und die Ermittlung einer Bewegungsbahn der Hand eines Benutzers,
- Fig. 7: eine Benutzerhand im Werkzeugbereich zu zwei verschiedenen Zeitpunkten,
- Fig. 8: eine Unterteilung des Werkzeugsbereichs mit einem Warnungsbereich und einem Aktorikbereich und
- Fig. 9: die Paneelsäge mit der in einer Führungseinheit angeordneten Werkzeugbetriebsüberwachungsvorrichtung.

### Beschreibung der Ausführungsbeispiele

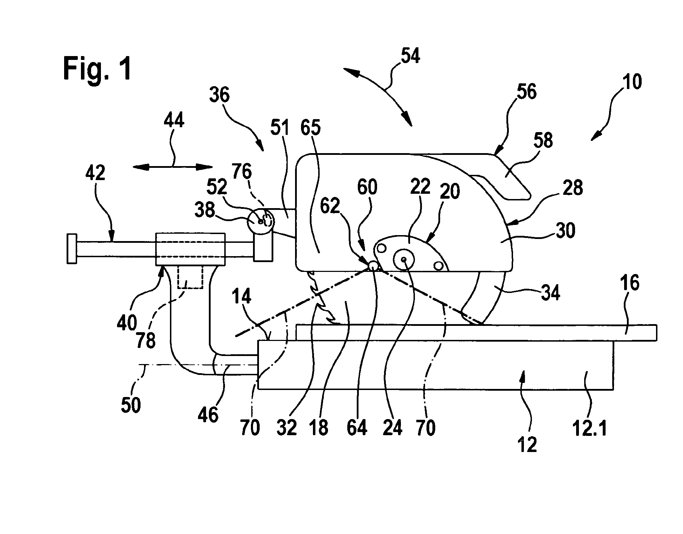

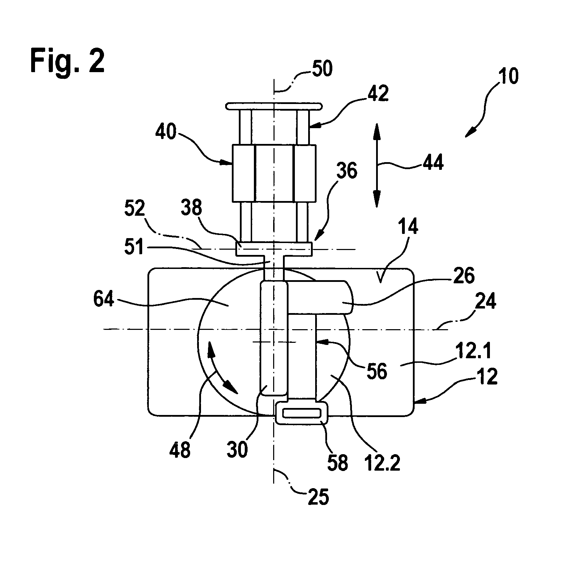

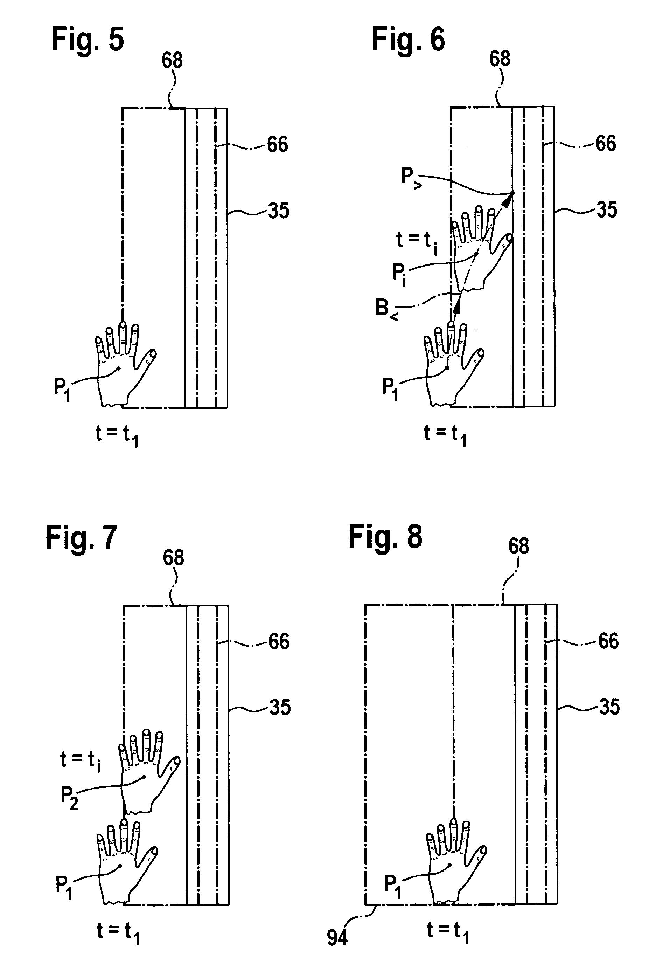

Figur 1 zeigt eine als Stationärgerät, und zwar als Paneelsäge ausgebildete Werkzeugmaschine 10 in einer Seitenansicht. In der folgenden Beschreibung wird ebenfalls auf die Figur 2 verwiesen, die die Werkzeugmaschine 10 aus Figur 1 in einer Ansicht von oben darstellt. Die Werkzeugmaschine 10 kann ferner als Kapp- und Gehrungssäge oder Zugsäge ausgebildet sein. Die Werkzeugmaschine 10 weist einen Arbeitstisch 12 auf, der eine zum Platzieren, z.B. zum Auflegen oder zum Aufstellen eines mittels der Werkzeugmaschine 10 zu bearbeitenden Werkstücks vorgesehene Arbeitsfläche 14 bildet. Wie Figur 2 zu entnehmen ist, weist der Arbeitstisch 12 ein erstes Bauelement 12.1, das mit einer nicht näher dargestellten Abstellfläche oder Stützvorrichtung zum Abstellen bzw. Stützen des Arbeitstischs 12 fest verbunden ist, und ein zweites, kreisförmiges Bauelement 12.2 auf, das um eine senkrecht zur Arbeitsfläche 14 stehende Achse relativ zum Bauelement 12.1 drehbar gelagert ist. In Figur 1 ist ein als Holzplatte ausgebildetes, zu sägendes Werkstück 16 auf der Arbeitsfläche 14 aufgelegt. Zur Bearbeitung des Werkstücks 16 umfasst die Werkzeugmaschine 10 ein Werkzeug 18, das als ein kreisförmiges Sägeblatt ausgeführt ist. Eine Werkzeuglagereinheit 20 der Werkzeugmaschine 10 ist zur Lagerung des Werkzeugs 18 vorgesehen. Die Werkzeuglagereinheit 20 weist ein Lagermittel 22 auf, das dazu dient, das Werkzeug 18 um eine Rotationsachse 24 rotatorisch zu lagern. Die Werkzeuglagereinheit 20 definiert hierbei eine Rotationsebene 25 für das Werkzeug 18, die den Schwerpunkt des Werkzeugs 18 einschließt und senkrecht zur Rotationsachse 24 steht. Bei einer Bearbeitung des Werkstücks 16 wird das Werkzeug 18 zu einer Rotation um die Rotationsachse 24 mittels einer als Elektromotor ausgebildeten Antriebseinheit 26 angetrieben. Zum Schutz eines Bedieners vor einer Berührung des Werkzeugs 18 ist die Werkzeugmaschine 10 mit einer als Schutzhaube vorgesehenen Schutzvorrichtung 28 versehen. Diese weist ein Hauptelement 30, welches eine Schneidkante 32 des Werkzeugs 18 um zumindest eine Hälfte ihres Umfangs bedeckt, und ein relativ zum Hauptelement 30 bewegliches Zusatzelement 34 auf, welches durch einen Kontakt mit dem Werkstück 16 bewegt werden kann. Wie Figur 1 zu entnehmen ist, ist die Werkzeuglagereinheit 20 an der Schutzvorrichtung 28 befestigt. Ferner weist das Bauelement 12.2 eine in Figur 5 gezeigte Öffnung 35 auf, die zur Einführung des Werkzeugs 18 vorgesehen ist.

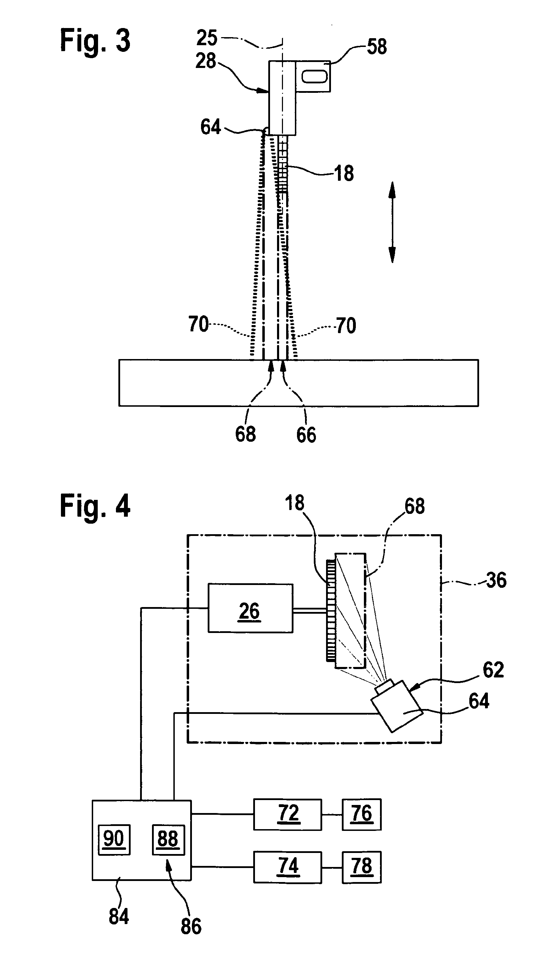

Das Werkzeug 18, die Werkzeuglagereinheit 20, die Antriebseinheit 26 und die Schutzvorrichtung 28 sind Bestandteile einer Werkzeugeinheit 36, die relativ zum Arbeitstisch 12 und insbesondere zum Bauelement 12.1 beweglich gelagert ist. Hierzu weist die Werkzeugmaschine 10 eine erste Lagereinheit 38 auf, die dazu vorgesehen ist, die Werkzeugeinheit 36 relativ zur Arbeitsfläche 14 beweglich zu lagern. Die Werkzeugeinheit 36 kann mittels der Lagereinheit 38 und eines Versenkarms 51 um eine horizontale, zur Rotationsachse 24 parallel ausgerichtete Rotationsachse 52 gedreht werden. Somit kann das Werkzeug 18 - ausgehend von einer in Figur 3 gezeigten Ruheposition - in die in Figur 1 gezeigte tiefere Arbeitsposition entlang einer gekrümmten Bewegungsbahn 54 an das zu bearbeitende Werkstück 16 angebracht werden.

Die Lagereinheit 38 ist selbst relativ zum Arbeitstisch 12 beweglich gelagert. Hierzu weist die Werkzeugmaschine 10 eine zweite Lagereinheit 40 auf. Die Lagereinheit 40 ist als eine Aufnahmeeinheit ausgeführt, die zur Aufnahme und Durchführung einer Führungseinheit 42 vorgesehen ist. Diese Führungseinheit 42, welche mit der Lagereinheit 38 fest verbunden ist, dient im Zusammenwirken mit der Lagereinheit 40 zu einer Führung der Werkzeugeinheit 36 und der Lagereinheit 38 in einer geraden Bewegungsrichtung 44, die parallel zur Arbeitsfläche 14 und senkrecht zur Rotationsachse 52 ausgerichtet ist. Hierbei können die Werkzeugeinheit 36 und die Lagereinheit 38 horizontale translatorische Bewegungen relativ zur Arbeitsfläche 14 durchführen. Die Führungseinheit 42 weist zwei als Führungsstangen ausgebildete Führungsmittel auf, die durch die Lagereinheit 40 hindurchgeführt sind. Die Lagereinheit 40 ist über einen Teilbereich 46 mit dem Arbeitstisch 12, und zwar mit dessen beweglichem Bauteil 12.2, befestigt. Hierbei können die Lagereinheiten 38, 40 und die Werkzeugeinheit 36 in einer Drehrichtung 48 um eine senkrecht zur Arbeitsfläche 14 stehende Achse gedreht werden, die im Arbeitstisch 12 mittig angeordnet ist. Die Lagereinheit 40 kann selbst relativ zum Arbeitstisch 12, und zwar insbesondere zum Bauelement 12.2, beweglich ausgeführt sein. Insbesondere kann sie Schwenkbewegungen um eine horizontal und parallel zur Bewegungsrichtung 44 ausgerichtete Neigungsachse 50 ausführen, wodurch Kippbewegungen der Werkzeugeinheit 36 relativ zur Arbeitsfläche 14 ausführbar sind. Hierzu kann das Werkzeug 18 - ausgehend von einer zur Arbeitsfläche 14 senkrechten Ausrichtung - geneigt werden.

Die Bewegung der Werkzeuglagereinheit 20 relativ zur Arbeitsfläche 14 kann durch den Bediener betätigt werden. Hierzu ist die Werkzeugmaschine 10, und zwar die Werkzeugeinheit 36, mit einer Betätigungseinheit 56 versehen. Diese weist einen Handgriff 58 auf, der zu einem Greifen durch eine Hand eines Bedieners vorgesehen ist. Hiermit können die Bewegung der Werkzeugeinheit 36 entlang der horizontalen Bewegungsrichtung 44 und die Bewegung der Werkzeugeinheit 36 um die Rotationsachse 52 entlang der Bewegungsbahn 54 in Richtung auf die Arbeitsfläche 14 zu und umgekehrt durch den Bediener betätigt werden. Der Versenkarm 51 ist federbelastet, so dass bei einem Loslassen der Betätigungseinheit 56 die Werkzeugeinheit selbstständig in die in Figur 3 gezeigte Ruheposition zurückfährt. Im Handgriff 58 integriert ist ein nicht näher dargestelltes Betätigungsmittel zum Starten eines Antriebs des Werkzeugs 18. Bei einem Bedienen der Werkzeugmaschine 10 greift ein Bediener mit einer Hand den Handgriff 58, während er die andere Hand typischerweise auf das Werkstück 16 auflegt. Zur Verhinderung eines Kontakts der Hand eines Bedieners mit dem rotierenden Werkzeug 18 ist die Werkzeugmaschine 10 mit einer Sicherheitsvorrichtung versehen, welche eine Werkzeugbetriebsüberwachungsvorrichtung 60 aufweist. Dies erfolgt mittels einer Bilderfassungseinheit 62, welche ein in der Figur gestrichelt dargestelltes, als Videokamera zur Aufnahme von Bildern zumindest im sichtbaren Spektrum ausgebildetes Erfassungsmittel 64 umfasst. Das Erfassungsmittel 64 ist mit der Werkzeugeinheit 36, und zwar insbesondere mit der Werkzeuglagereinheit 20, fest verbunden. Hierbei ist das Erfassungsmittel 64 an der Schutzvorrichtung 28, und zwar an deren Hauptelement 30, befestigt. Die Schutzvorrichtung 28 dient als Mitnahmemittel 65, das dazu vorgesehen ist, das Erfassungsmittel 64 bei jeglicher Bewegung der Werkzeuglagereinheit 20 relativ zur Arbeitsfläche 14 mitzunehmen.

Figur 3 zeigt die Werkzeugeinheit 36 mit der Schutzvorrichtung 28, dem Werkzeug 18, dem Handgriff 58 und dem Erfassungsmittel 64 in der Ruheposition der Werkzeugeinheit 36 in einer Frontansicht. Wie oben beschrieben, kann mittels der Betätigungseinheit 56 die Werkzeugeinheit 36 in eine tiefer angeordnete Arbeitsposition gefahren werden. Die Beweglichkeit des Werkzeugs 18 legt einen Werkzeugstreckenbereich 66 fest, der einem Raumbereich entspricht, welcher potentiell durch das Werkzeug 18 belegbar ist. Der Werkzeugstreckenbereich 66 ist mittels vertikaler gestrichelter Linien dargestellt. Der Werkzeugstreckenbereich 66 erstreckt sich ebenfalls aufgrund der Beweglichkeit des Werkzeugs 18 in Bewegungsrichtung 44 in horizontaler Richtung senkrecht zur Zeichnungsebene. Die Werkzeugbetriebsüberwachungsvorrichtung 60 dient dazu, einen Werkzeugbereich 68 zu überwachen. Dieser Werkzeugbereich 68 grenzt an den Werkzeugstreckenbereich 66 an und setzt sich aus Punkten zusammen, die einen kleinsten Abstand zum Werkzeugstreckenbereich 66 von maximal 2 cm aufweisen. Der zu überwachende Werkzeugbereich 68 ist seitlich der Rotationsebene 25 angeordnet, und zwar ist er der Betätigungseinheit 56, insbesondere dem Handgriff 58, relativ zur Rotationsebene 25 abgewandt. Hierbei sind der Werkzeugbereich 68 und die Betätigungseinheit 56 beidseitig der Rotationsebene 25 angeordnet. Der Werkzeugstreckenbereich 66 und der Werkzeugbereich 68 sind mittels strichpunktierter Linien schematisch abgegrenzt. Das Erfassungsmittel 64 weist ein durch einfach gestrichelte Linien in Figur 3 gezeigtes Blickfeld 70 auf (siehe auch Figur 1), das einen überwachten Bereich der Werkzeugmaschine 10 definiert, der einen wesentlichen Teil des Werkzeugbereichs 68 umfasst. Wie Figur 3 zu entnehmen ist, kann der überwachte Bereich ebenfalls einen Teil des Werkzeugstreckenbereichs 66 umfassen. Zur Überwachung des Werkzeugbereichs 68 ist das Erfassungsmittel 64 seitlich des Werkzeugs 18 angeordnet, und zwar auf einer der Betätigungseinheit 56, insbesondere dem Handgriff 58, abgewandten Seite der Rotationsebene 25. Hierbei sind die Betätigungseinheit 56 und das Erfassungsmittel 64 beidseitig der Rotationsebene 25 angeordnet.

Die Sicherheitsvorrichtung weist ferner Aktorikeinheiten 72, 74 auf, die zur Durchführung von Sicherheitsmaßnahmen im Zusammenwirken mit der Werkzeugbetriebsüberwachungsvorrichtung 60 vorgesehen sind. Dies wird anhand von Figur 4 näher dargestellt, welche in einer schematischen Darstellung eine Schaltung mit der Bilderfassungseinheit 62, den Aktorikeinheiten 72, 74 und der am Werkzeug 18 gekoppelten Antriebseinheit 26 zeigt. Die Aktorikeinheiten 72, 74 sind jeweils dazu vorgesehen, ein Sicherungsmittel 76 bzw. 78 anzutreiben. Das Sicherungsmittel 76, welches in Figur 1 schematisch dargestellt ist, ist ein als Klemmmittel ausgebildetes Sperrmittel, das im Bereich der Rotationsachse 52 angeordnet ist. Insbesondere ist das Sicherungsmittel 76 in der Lagereinheit 38 angeordnet. Das Sicherungsmittel 76 dient dazu, eine durch den Bediener angetriebene Rotationsbewegung der Werkzeugeinheit 36 um die Rotationsachse 52, d.h. eine Bewegung des Werkzeugs 18 entlang der Bewegungsbahn 54, zu verhindern. In einer diese Bewegung freigebenden Stellung ist das Sicherungsmittel 76 federbelastet. Die Aktorikeinheit 72 dient dazu, das Sicherungsmittel 76 - ausgehend von dieser die Bewegung freigebenden Stellung - in eine die Bewegung sperrende Sperrstellung zu bringen sowie ein Zurücksetzen des Sicherungsmittels 76 in dessen freigebende Stellung zu betätigen. Das Sicherungsmittel 78, welches in Figur 1 ebenfalls schematisch dargestellt ist, ist in der Lagereinheit 40 angeordnet. Es dient dazu, eine Bewegung einer durch den Bediener angetriebenen Translation der Werkzeugeinheit 36 entlang der Bewegungsrichtung 44 zu verhindern. Das Sicherungsmittel 78 ist ebenfalls ein als Klemmmittel ausgebildetes Sperrmittel und kann mittels der Aktorikeinheit 74 betätigt werden. Hierzu wird auf die Beschreibung des Sicherungsmittels 76 verwiesen.

Die Aktorikeinheiten 72, 74 lösen eine Betätigung des Sicherungsmittels 76 bzw. 78 in Abhängigkeit eines Signals der Werkzeugbetriebsüberwachungsvorrichtung 60 aus, und zwar insbesondere ein Signal einer Auswerteeinheit 84 der Werkzeugbetriebsüberwachungsvorrichtung 60. Hierzu steht die Auswerteeinheit 84 in Wirkverbindung mit den Aktorikeinheiten 72, 74. Die Auswerteeinheit 84 ist dazu vorgesehen, durch die Bilderfassungseinheit 62 erfasste Bilddaten auszuwerten und steht hierzu in Wirkverbindung mit der Bilderfassungseinheit 62. Die Auswerteeinheit 84 weist eine Bildverarbeitungseinheit 86 auf, die ein Auswertemittel 88, das als Mikroprozessor ausgebildet ist, und eine Speichereinheit 90 umfasst, die zur Speicherung eines Bildverarbeitungsprogramms vorgesehen ist. Die Bildverarbeitungseinheit 86 dient insbesondere dazu, anhand von Bildaufnahmen, die mittels des Erfassungsmittels 64 aufgenommen sind, das Vorhandensein eines menschlichen Körperteils im Werkzeugbereich 68 zu erkennen. Hierzu kann ein aufgenommenes Bild mittels des Bildverarbeitungsprogramms auf eine für das menschliche Gewebe und/oder für ein von einem Bediener getragenes typisches Kleidungsstück, wie z.B. einen Schutzhandschuh, typische Textur untersucht werden. Eine Erkennung kann ferner mittels einer Farbanalyse eines Bilds erfolgen, indem das Bild auf eine für die menschliche Haut typische Farbe untersucht wird. Ferner kann ein aufgenommenes Bild mittels einer Konturanalyse bzw. einer Konturextraktion ausgewertet werden, wobei das Bild auf eine für eine Hand typische Kontur untersucht wird.

Figur 5 zeigt einen Teilbereich des Arbeitstischs 12 mit der im drehbaren Bauelement 12.2 ausgesparten Öffnung 35 sowie die Kontur des zu überwachenden Werkzeugbereichs 68 und des Werkzeugstreckenbereichs 66 in einer Ansicht von oben. Nach dem Erkennen des Vorhandenseins eines menschlichen Körperteils im Werkzeugbereich 68, insbesondere einer Hand eines Bedieners wie in Figur 5 dargestellt, wird dessen Position P₁ zu einem Zeitpunkt t₁ relativ zum Werkzeugstreckenbereich 66 ermittelt. Das Erfassungsmittel 64 erfasst Bilder des Werkzeugbereichs 68 laufend zu sukzessiven Zeitpunkten. Die Auswertung der Bilddaten erfolgt in Echtzeit, indem die erfasste Folge laufend mittels der Auswerteeinheit 84 ausgewertet wird. Hierbei können die erfassten Bilder nacheinander ausgewertet werden. Im in Figur 6 betrachteten Beispiel wird die Hand eines Bedieners in einer Position Pᵢ zu einem späteren Zeitpunkt tᵢ lokalisiert. Zwischen den Zeitpunkten tᵢ und tᵢ kann eine Folge von Bildern aufgenommen werden, die der Übersichtlichkeit halber in der Figur nicht dargestellt ist. Mittels der Ermittlung der verschiedenen Positionen der Hand eines Bedieners zwischen P₁ und Pᵢ wird durch das Auswertemittel 88 die Bewegungsbahn B< der Hand eines Bedieners ermittelt. Anhand dieser Bewegungsbahn B<, die von der Hand eines Bedieners vor dem aktuellen Erfassungszeitpunkt tᵢ zurückgelegt worden ist, ermittelt das Auswertemittel 88 eine für die Hand eines Bedieners zu einem späteren Zeitpunkt t> erwartete Position P>. Hierbei wird die anhand von aufgenommenen Bildern ermittelte Bewegungsbahn B< durch das Auswertemittel 88 auf die künftige Position P> extrapoliert.

Die Auswerteeinheit 84 ist ferner dazu vorgesehen, anhand von zu unterschiedlichen Zeitpunkten aufgenommenen Bildern einen Geschwindigkeitsgrad der erfassten Hand eines Bedieners im Werkzeugbereich zu ermitteln. Dies wird anhand eines Vergleichs der Figuren 6 und 7 beschrieben. Wie oben beschrieben, wird die Hand eines Bedieners in Figur 6 zu einem Zeitpunkt tᵢ in einer Position Pᵢ lokalisiert. Im in Figur 7 betrachteten Beispiel wird die Hand eines Bedieners im Werkzeug mit einer höheren Geschwindigkeit bewegt. Hierbei wird die Hand eines Bedieners zum gleichen Zeitpunkt tᵢ in einer Position P₂ vor der Position Pᵢ lokalisiert. Das Auswertemittel 88 ermittelt anhand eines Vergleichs der zu zwei Zeitpunkten t₁ und tᵢ ermittelten Positionen einen Geschwindigkeitsgrad. Beispielsweise kann eine Handbewegung einer Geschwindigkeitsstufe "schnell", "mittelschnell", "langsam" usw. zugeordnet werden.

Es wird nun das Auslösen von Sicherheitsmaßnahmen in verschiedenen Sicherheitsmodi erläutert. Es wird angenommen, dass der Bediener das rotierende Werkzeug aus der in Figur 3 gezeigten Ruheposition in die tiefere, in Figur 1 gezeigte Arbeitsposition durch eine Rotationsbewegung um die Rotationsachse 52 mittels der Betätigungseinheit 56 versenken will. Ferner wird angenommen, dass seine linke Hand mittels der Auswerteeinheit 84 im Werkzeugbereich 68 lokalisiert wird. In einem ersten Sicherheitsmodus der Sicherheitsvorrichtung löst das Erkennen des Vorhandenseins der Hand eines Bedieners im Werkzeugbereich 68 automatisch mittels des Sendens eines Signals der Auswerteeinheit 84 an die Aktorikeinheit 72 das Betätigen der Aktorikeinheit 72 aus. Hierbei wird durch das Sicherungsmittel 76 die Senkbewegung des Werkzeugs 18 verhindert. In zwei weiteren Sicherheitsmodi wird ein Geschwindigkeitsgrad der Hand eines Bedieners ermittelt. Wird die Bewegung als eine "langsame" Bewegung identifiziert, so wird in einem Sicherheitsmodus der Bediener mittels einer optischen und/oder akustischen Ausgabeeinheit gewarnt. Hierbei wird die Bewegungsbahn der Hand eines Bedieners laufend analysiert. Führt die Bewegungsbahn bzw. eine extrapolierte Bewegungsbahn auf den Werkzeugstreckenbereich 66 zu, so wird ein Betätigen der Aktorikeinheit 72 ausgelöst. Wird die Bewegung als eine "schnelle" Bewegung identifiziert, wie z.B. bei einem Rutschen der Hand eines Bedieners auf einer Werkstückoberfläche, so wird in einem weiteren Sicherheitsmodus die Aktorikeinheit 72 umgehend betätigt. Ein weiterer Sicherheitsmodus sieht als Sicherheitsmaßnahme vor, die Drehzahl des rotierenden Werkzeugs 18 zu ändern. Hierzu steht die Auswerteeinheit 84 in Wirkverbindung mit der Antriebseinheit 26. Zu einer Warnung des Bedieners kann anhand eines Signals der Auswerteeinheit 84 die Rotation des Werkzeugs 18 gebremst werden. In einer weiteren Sicherheitsstufe wird das Werkzeug 18 anhand eines Signals der Auswerteeinheit 84 automatisch gestoppt.

Ferner wird vorgeschlagen, dass die Bilderfassungseinheit 62 zusätzlich zum Werkzeugbereich 68 zur Überwachung eines weiteren Modusbereichs 94 vorgesehen ist. Dies ist in Figur 8 dargestellt. Der Werkzeugbereich 68 und der Modusbereich 94 sind jeweils einem unterschiedlichen Sicherheitsmodus zugeordnet, der durchgeführt wird, wenn das Vorhandensein eines menschlichen Körperteils im Werkzeugbereich 68 bzw. im Modusbereich 94 von der Auswerteeinheit 84 erkannt wird. So kann z.B. der Werkzeugbereich 68 einem Aktorikbereich entsprechen, der an den Werkzeugstreckenbereich 66 direkt angrenzt und in welchem die oben beschriebenen Sicherheitsmodi mit der Aktorikeinheit 72 bzw. 74 aktivierbar sind. Der Modusbereich 94, der an den Werkzeugbereich 68 angrenzt und in Richtung der Rotationsachse 24 auf die Rotationsebene 25 zu vor dem Werkzeugbereich 68 angeordnet ist, kann einem Warnungsbereich entsprechen. Erkennt die Auswerteeinheit 84 die Anwesenheit eines menschlichen Körperteils im Modusbereich 94, so löst die Auswerteeinheit 84 ein Warnsignal zum Warnen des Bedieners aus. Der Werkzeugbereich 68 und der Modusbereich 94 können vom Erfassungsmittel 64 überwacht werden, oder es können zwei unterschiedliche Erfassungsmittel der Bilderfassungseinheit 62 zur Überwachung des Werkzeugbereichs 68 und des Modusbereichs 94 vorgesehen sein.

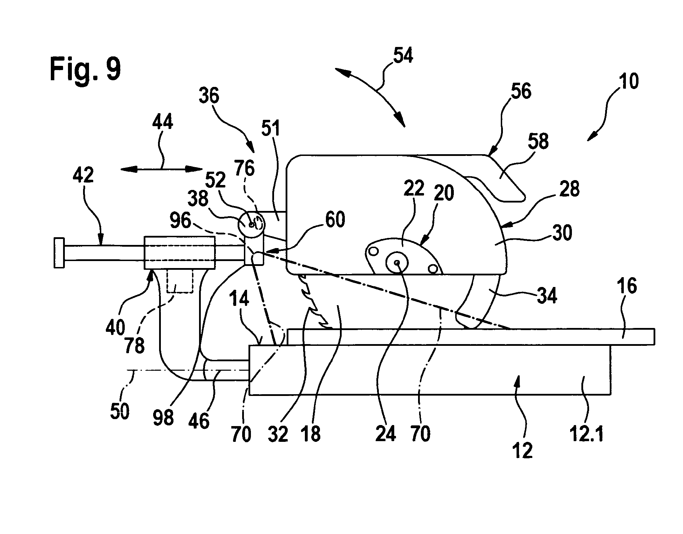

Figur 9 zeigt eine alternative Ausführung der Werkzeugmaschine 10. Gleich bleibende Bauteile werden mit den gleichen Bezugszeichen bezeichnet. Die folgende Beschreibung beschränkt sich auf die Unterschiede zur oben beschriebenen Ausführung. In dieser Alternative weist die Bilderfassungseinheit 62 ein als Videokamera ausgebildetes Erfassungsmittel 96 auf. Dieses ist in der Führungseinheit 42, und zwar in einem Teilbereich unterhalb der Lagereinheit 38, integriert. Dieser Teilbereich dient insbesondere als Anschlag zum Arretieren einer Bewegung der Führungsmittel durch die Lagereinheit 40. Hierbei dient die Führungseinheit 42 als Mitnahmemittel 98, das zum Mitnehmen des Erfassungsmittels 96 bei einer translatorischen Bewegung der Werkzeuglagereinheit 20 in Bewegungsrichtung 44 dient. Bei einer Ausführung der Werkzeugmaschine 10, in welcher die Antriebseinheit 26 und die Betätigungseinheit 56 beidseitig der Rotationsebene 25 angeordnet sind, wobei die Antriebseinheit 26 dann den zu überwachenden Werkzeugbereich 68 überragt, ist denkbar, dass ein Erfassungsmittel der Bilderfassungseinheit 62 an einem Gehäuse der Antriebseinheit 26 befestigt ist. Kombinationen der oben beschriebenen Anordnungen der Erfassungsmittel sind ebenfalls denkbar.

## Patentansprüche

1. Werkzeugmaschine, insbesondere Sägemaschine, mit einer Arbeitsfläche (14) zum Platzieren eines zu bearbeitenden. Werkstücks (16) und einer Werkzeuglagereinheit (20) zum Lagern eines Werkzeugs (18), die relativ zur Arbeitsfläche (14) beweglich gelagert ist, wobei die Werkzeuglagereinheit ein Lagermittel (22) aufweist, dass dazu dient, das Werkzeug (18) um eine Rotationsachse (24) rotatorisch zu lagern, **gekennzeichnet durch** eine Werkzeugbetriebsüberwachungsvorrichtung (60) zur Überwachung eines Werkzeugbereichs (68) zumindest bei einem Werkzeugbetrieb, die eine Bilderfassungseinheit (62) aufweist, wobei ein Mitnahmemittel (65; 98) vorhanden ist, das dazu dient, zumindest ein Erfassungsmittel (64; 96) der Bilderfassungseinheit (62) bei einer Bewegung der Werkzeuglagereinheit (20) relativ zur Arbeitsfläche (14) mitzunehmen.

2. Werkzeugmaschine nach Anspruch 1, **gekennzeichnet durch** eine Schutzvorrichtung (28) zum Bedecken eines Werkzeugs (18), an welcher zumindest ein Erfassungsmittel (64) der Bilderfassungseinheit (62) befestigt ist.

3. Werkzeugmaschine nach einem der vorhergehenden Ansprüche, **gekennzeichnet durch** eine Führungseinheit (42), an welcher zumindest ein Erfassungsmittel (96) der Bilderfassungseinheit (62) befestigt ist.

4. Werkzeugmaschine nach einem der vorhergehenden Ansprüche, **dadurch gekennzeichnet, dass** die Werkzeuglagereinheit (20) zur rotatorischen Lagerung eines Werkzeugs (18) in einer Rotationsebene (25) vorgesehen ist und die Bilderfassungseinheit (62) ein Erfassungsmittel (64; 96) aufweist, das seitlich der Rotationsebene (25) angeordnet ist.

5. Werkzeugmaschine nach Anspruch 4, **dadurch gekennzeichnet, dass** eine Betätigungseinheit (56) zur Bewegung der Werkzeuglagereinheit (20) relativ zur Arbeitsfläche (14) durch einen Bediener vorgesehen ist und dass die Betätigungseinheit (56) und das Erfassungsmittel (64; 96) beidseitig der Rotationsebene (25) angeordnet sind.

6. Werkzeugmaschine nach einem der vorhergehenden Ansprüche, **gekennzeichnet durch** ein Sicherungsmittel (76, 78), das dazu vorgesehen ist, anhand eines Signals der Werkzeugbetriebsüberwachungsvorrichtung (60) eine Bewegung der Werkzeuglagereinheit (20) relativ zur Arbeitsfläche (14) zu verhindern.

7. Werkzeugmaschine nach einem der vorhergehenden Ansprüche, **dadurch gekennzeichnet, dass** die Werkzeugbetriebsüberwachungsvorrichtung (60) eine Bildverarbeitungseinheit (86) aufweist, die zur Auswertung von zumindest einem Merkmal aus der Gruppe Farbe, Kontur und Textur vorgesehen ist.

8. Werkzeugmaschine nach einem der vorhergehenden Ansprüche, **dadurch gekennzeichnet, dass** die Werkzeugbetriebsüberwachungsvorrichtung (60) eine Bildverarbeitungseinheit (86) aufweist, die anhand von erfassten Bilddaten zur Ermittlung einer Bewegungsbahn (B) eines sich im Werkzeugbereich (68) bewegenden Objekts vorgesehen ist.

9. Werkzeugmaschine nach einem der vorhergehenden Ansprüche, **dadurch gekennzeichnet, dass** die Werkzeugbetriebsüberwachungsvorrichtung (60) eine Bildverarbeitungseinheit (86) aufweist, die anhand von erfassen Bilddaten zur Ermittlung eines Geschwindigkeitsgrads eines sich im Werkzeugbereich (68) bewegenden Objekts vorgesehen ist.

## Claims

1. Machine tool, in particular sawing machine, having a work surface (14) for placing a workpiece to be machined (16) and a tool support unit (20) for supporting a tool (18), said tool support unit (20) being mounted in a movable manner in relation to the work surface (14), wherein the tool support unit has a support means (22) which serves to support the tool (18) in a rotational manner about an axis of rotation (24), **characterized by** a tool operation monitoring device (60) for monitoring a tool region (68) at least during tool operation, said tool operation monitoring device (60) having an image detection unit (62), wherein a driver means (65; 98) is present and serves to drive at least one detection means (64; 96) of the image detection unit (62) in the event of a movement of the tool support unit (20) in relation to the work surface (14).

2. Machine tool according to Claim 1, **characterized by** a protective device (28) for covering a tool (18), at least one detection means (64) of the image detection unit (62) being fastened to said protective device (28).

3. Machine tool according to either of the preceding claims, **characterized by** a guide unit (42) to which at least one detection means (96) of the image detection unit (62) is fastened.

4. Machine tool according to one of the preceding claims, **characterized in that** the tool support unit (20) is provided to support a tool (18) in a rotational manner in a rotation plane (25), and the image detection unit (62) has a detection means (64; 96) which is arranged to the side of the rotation plane (25).

5. Machine tool according to Claim 4, **characterized in that** an actuating unit (56) for an operator to move the tool support unit (20) in relation to the work surface (14) is provided, and **in that** the actuating unit (56) and the detection means (64; 96) are arranged on either side of the rotation plane (25).

6. Machine tool according to one of the preceding claims, **characterized by** a securing means (76, 78), which is provided to prevent the tool support unit (20) from moving in relation to the work surface (14) on the basis of a signal from the tool operation monitoring device (60).

7. Machine tool according to one of the preceding claims, **characterized in that** the tool operation monitoring device (60) has an image processing unit (86), which is provided to evaluate at least one feature from the group consisting of colour, contour and texture.

8. Machine tool according to one of the preceding claims, **characterized in that** the tool operation monitoring device (60) has an image processing unit (86), which is provided to use detected image data to determine a movement path (B<) of an object moving in the tool region (68).

9. Machine tool according to one of the preceding claims, **characterized in that** the tool operation monitoring device (60) has an image processing unit (86), which is provided to use detected image data to determine a speed of an object moving in the tool region (68).

## Revendications

1. Machine-outil, en particulier scie, comprenant une surface de travail (14) pour placer une pièce (16) à usiner, et une unité de support d'outil (20) pour supporter un outil (18), laquelle est montée de manière déplaçable par rapport à la surface de travail (14), l'unité de support d'outil présentant un moyen de palier (22) qui sert à supporter l'outil (18) en rotation autour d'un axe de rotation (24), **caractérisée par** un dispositif de surveillance du fonctionnement de l'outil (60) pour surveiller une zone de l'outil (68) au moins pendant le fonctionnement de l'outil, lequel dispositif de surveillance présente une unité de capture d'image (62), un moyen d'entraînement (65 ; 98) étant prévu, lequel sert à entraîner au moins un moyen de détection (64 ; 96) de l'unité de capture d'image (62) dans le cas d'un mouvement de l'unité de support d'outil (20) par rapport à la surface de travail (14).

2. Machine-outil selon la revendication 1, **caractérisée par** un dispositif de protection (28) pour recouvrir un outil (18) sur lequel est fixé au moins un moyen de détection (64) de l'unité de capture d'image (62).

3. Machine-outil selon l'une quelconque des revendications précédentes, **caractérisée par** une unité de guidage (42), sur laquelle est fixé au moins un moyen de détection (96) de l'unité de capture d'image (62).

4. Machine-outil selon l'une quelconque des revendications précédentes, **caractérisée en ce que** l'unité de support d'outil (20) est prévue pour le support rotatif d'un outil (18) dans un plan de rotation (25), et l'unité de capture d'image (62) présente un moyen de détection (64 ; 96), qui est disposé latéralement par rapport au plan de rotation (25).

5. Machine-outil selon la revendication 4, **caractérisée en ce qu'**il est prévu une unité d'actionnement (56) pour déplacer l'unité de support d'outil (20) par rapport à la surface de travail (14) par un opérateur, et **en ce que** l'unité d'actionnement (56) et le moyen de détection (64 ; 96) sont disposés de chaque côté du plan de rotation (25).

6. Machine-outil selon l'une quelconque des revendications précédentes, **caractérisée par** un moyen de fixation (76, 78) qui est prévu pour empêcher un mouvement de l'unité de support d'outil (20) par rapport à la surface de travail (14) à l'aide d'un signal du dispositif de surveillance du fonctionnement de l'outil (60).

7. Machine-outil selon l'une quelconque des revendications précédentes, **caractérisée en ce que** le dispositif de surveillance du fonctionnement de l'outil (60) présente une unité de traitement d'image (86), qui est prévue pour analyser au moins une caractéristique à partir du groupe couleur, contour et texture.

8. Machine-outil selon l'une quelconque des revendications précédentes, **caractérisée en ce que** le dispositif de surveillance du fonctionnement de l'outil (60) présente une unité de traitement d'image (86) qui est prévue pour déterminer, à l'aide de données d'image détectées, une trajectoire de déplacement (B<) d'un objet se déplaçant dans la zone de l'outil (68).

9. Machine-outil selon l'une quelconque des revendications précédentes, **caractérisée en ce que** le dispositif de surveillance du fonctionnement de l'outil (60) présente une unité de traitement d'image (86) qui est prévue pour déterminer, à l'aide de données d'image détectées, un degré de vitesse d'un objet se déplaçant dans la zone de l'outil (68).
